# EUROPEAN PATENT SPECIFICATION

(11) **EP 1 565 342 B1**
(45) Date of publication and mention of the grant of the patent: **18.06.2008**
(21) Application number: 03775620.2
(22) Date of filing: 26.11.2003
(51) Int. Cl.: B60N 2/30

(54) **AN ARTICULATED CONNECTION SYSTEM, AND A MOTOR VEHICLE SEAT INCORPORATING THIS SYSTEM**
GELENKIGES VERBINDUNGSSYSTEM, UND KRAFTFAHRZEUGSITZ MIT DIESEM SYSTEM
SYSTEME DE LIAISON ARTICULE, ET SIEGE DE VEHICULE A MOTEUR INCORPORANT CELUI-CI

(30) Priority: 29.11.2002 IT TO20021040
(43) Date of publication of application: 24.08.2005
(73) Proprietor: C.R.F. SOCIETÀ CONSORTILE PER AZIONI, 10043 Orbassano (Torino) (IT)
(72) Inventor: RINERO, Enrico, c/o C. R. F. Società, I-10043 Orbassano (IT)
(74) Representative: Notaro, Giancarlo
(86) International application number: PCT/IB2003/005477
(87) International publication number: WO 2004/050417

(56) References cited:
- WO-A-03/078201
- DE-A- 3 332 534
- US-A- 2 926 950
- US-A- 3 140 114
- US-A- 4 368 916
- US-A- 5 482 349
- US-A- 5 570 931

## Description

The present invention relates to an articulated connection system, of the type comprising a first structure, a second structure connected to said first structure by means of articulated connecting means, and movable relative to said first structure between a first position and a second position.

An articulated connection system of the type indicated above is for instance used in the rear seats of motor vehicles in which the backrest of the seat can be rotated forward from a substantially upright position of normal use to a lowered position, in contact with the seat cushion, in which the luggage compartment of the motor vehicle is expanded. US-A-3 140 114 describes an articulated connection system of the type above described and comprising all the features indicated in the preamble of claim 1.

In this specific application, there is the problem of preventing, in the lowered position of the backrest of the rear seat, the upper end of the backrest, and in particular the headrest usually positioned above the backrest, from interfering with the backrest of the front seat of the motor vehicle. To solve this problem, various solutions have been proposed, from the most elementary one consisting of removing the headrest of the backrest of the rear seat before lowering it forward, to relatively complicated and costly solutions, such as the one in which the head rest is connected to a system that automatically causes it to be lowered into a space within the backrest of the rear seat as a result of a forward rotation of said backrest.

The object of the present invention is to provide an articulated connection system which has a simple, low cost structure and is able to overcome the aforementioned problems in the case of a specific application of the type set out above.

An additional specific object of the invention is to provide a rear seat of a motor vehicle which is fitted with simple, low cost means able to prevent the problem described above.

In view of achieving these and other objects, the invention relates to an articulated connection system, comprising a system of four levers defining a double quadrilateral linkage, as defined in claim 1.

The system with double articulated quadrilateral is so shaped and arranged that the displacement of the backrest of the seat from its first position to its second position occurs with a complex rotation which brings the backrest to a position over the cushion that is slightly to the rear, relative to the direction of advance of the motor vehicle, so that the upper edge of the backrest or the head rest which may be positioned over it is substantially flush with the front edge of the cushion, relative to said longitudinal direction.

Further features and advantages of the invention shall become more readily apparent from the description that follows with reference to the accompanying drawings, provided purely by way of non limiting example, in which:

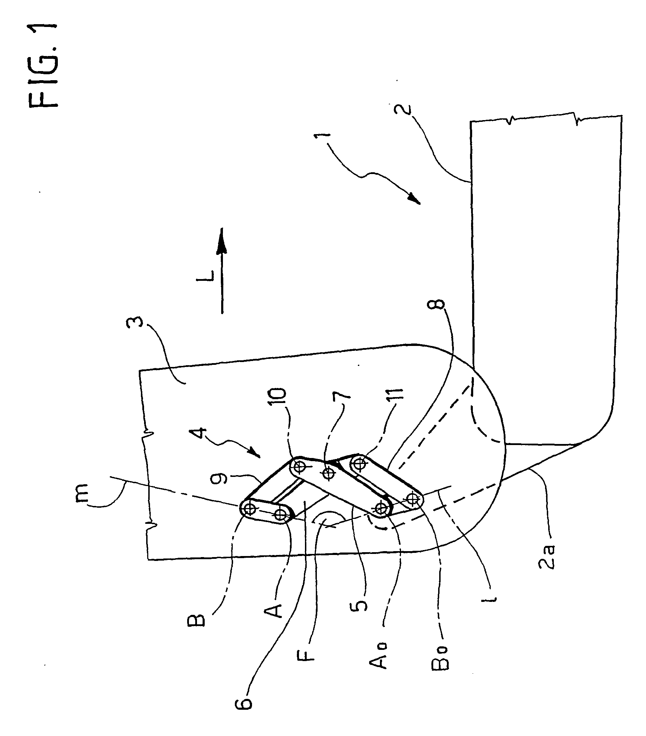

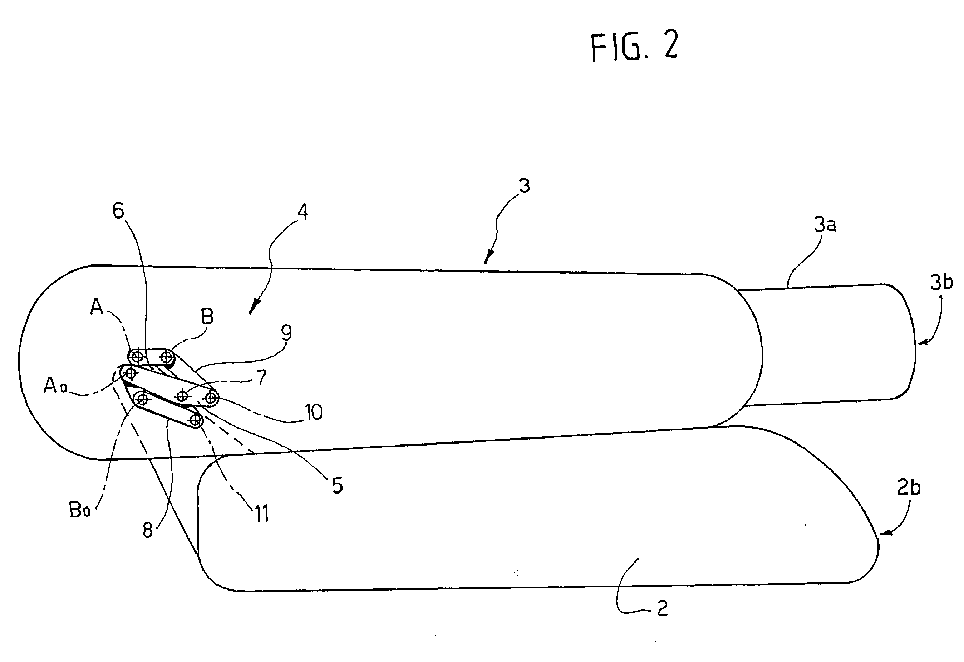

Figures 1, 2 are two schematic lateral view of a motor vehicle rear seat with the seat respectively shown in the upright position for normal use and in the position rotated forward over the cushion, for enlarging the luggage compartment of the motor vehicle.

In the drawings, the number 1 generally designates a motor vehicle rear seat, comprising a cushion 2 and a backrest 3. The structure of the cushion 2 and of the backrest 3 is not shown in detail herein, since it can be obtained in any known fashion. According to the prior art, both the cushion 2 and the backrest 3 comprise a metal frame whereon is mounted a padding provided with a cover. The metal frame of the cushion 2 is destined to be anchored to the body of the motor vehicle, whilst the metal frame of the backrest 3 is pivotally connected either directly to the body of the motor vehicle, or to the frame of the cushion 2, in such a way as to allow the backrest to be moved between an upright position for normal use (Figure 1) and a position rotated forward, in which the backrest is set down on the cushion and the rear wall of the backrest constitutes an extension of the floor of the luggage compartment of the motor vehicle.

The means for the articulated connection of the frame to the backrest 3 comprise two double quadrilateral systems positioned at the two sides of the backrest. Figures 1, 2 show only one of said systems, as it is evident that said system is identically replicated on the opposite side of the seat.

In the drawings, the references A₀ and B₀ designate two mutually parallel axes, perpendicular relative to the longitudinal vertical plane of the seat and of the motor vehicle which are fixed relative to the cushion 2. Said axes are defined by a plate 2a projecting to the posteriorly and superiorly from the cushion 2 and being a part of the frame of the cushion (or of the body).

The references A, B designate two axes parallel to the axes A₀ and B₀ which are defined over the frame of the backrest 3. Therefore, whilst the position of the axes A₀, B₀ is fixed relative to the cushion 2, the position of the axes A₀, B₀ is fixed relative to the backrest 3. The frame of the backrest 3 is connected to the bracket 2a by means of a lever system with double articulated quadrilateral, generally designated by the reference number 4. Said lever system is pivotally connected at one of its ends to the plate 2a about the axes A0, B0 and at its opposite end to the frame of the backrest 3, about the axes A, B.

In detail, the lever system 4 comprises two central levers 5, 6, arranged crosswise, mutually articulated about an axis 7, as well as to additional articulated levers 8, 9. The first central lever 5 is articulated at one of its ends to the bracket 2a about the axis A₀ and at its opposite end in correspondence with an axis 10 to the articulated lever 9, whose opposite end is in turn articulated in B to the frame of the backrest. The lever 8 is articulated at one of its ends in B₀ to the bracket 2a and at its opposite end, in correspondence with an axis 11, to an end of the other lever 6 of the two central crossed levers, the opposite end thereof being articulated to the frame of the backrest in A.

The straight lines 1, m which orthogonally meet the axes A, B and A₀ and B₀ form and angle E with each other, which in the illustrated example is obtuse.

Thanks to the arrangement described above, when the backrest 3 is rotated forward to be lowered over the cushion 2, said movement takes place according to a complex rotation. Whilst the two levers 5, 8 complete a rotation about the axes A₀, B₀, clockwise (with reference to the figures) the other two levers 6, 9 rotate counter-clockwise about their articulations 11, 10 on the two levers 8, 5, so that in its lowered position on the cushion 2 the backrest is slightly rearward relative to the longitudinal direction of advance of the motor vehicle (indicated by the arrow A in Figure 1). In this condition, the upper edge of the head rest 3a mounted over the backrest 3 (designated as 3b) is substantially flush with the front edge 2b of the cushion, relative to the longitudinal direction A. The backrest 3 can therefore be moved forward without any risk that the headrest 3a may interfere with the front seat of the motor vehicle.

The articulated connection system according to the invention therefore allows efficiently to solve the problem discussed above, using extremely simple and low cost means.

Naturally, without altering the principle of the invention, the construction details and the embodiments may vary amply from what has been described and illustrated purely by way of example, without thereby departing from the scope of the present invention.

Obviously, although the accompanying drawings illustrate a specific application of the system according to the invention to a motor vehicle rear seat, said system is suitable for various applications, different from the one illustrated herein.

## Claims

1. An articulated connection system, comprising:
- a first structure (2),
- a second structure (3), connected to said first structure (2) by means of articulated connection means (4),
**said first structure (2) being the cushion frame of a motor vehicle seat, or the body of the motor vehicle, and said second structure (3) being the backrest frame of said seat,**
**wherein** said articulated connection means (4) comprise a system of four levers (5, 6, 8, 9) defining a double quadrilateral linkage, and articulated at one side to two first parallel axes (A₀, B₀) positioned on said first structure (2), and at the opposite side to two second parallel axes (A, B) positioned on said second structure (3), and having two central levers of said four levers (5, 6) arranged crosswise and mutually articulated
**characterised in that** at the two aforesaid first axes (A₀, B₀) there are respectively articulated a first end of a first (5) of said central levers and a first end of a third lever (8), and
at the two aforesaid second axes (A, B) there are respectively articulated a first end of the second central lever (6) and a first end of a fourth lever (9), and
**in that** the second end of the third lever (8) is articulated to the second end of the second central lever (6), and
**in that** the second end of the fourth lever (9) is articulated to the second end of the first central lever (5).

2. An articulated connection system as claimed in claim **1, characterised in that** a first straight line (1) intersecting the two first axes (A₀, B₀) perpendicularly thereto, and a second straight line (m) intersecting the two second axes (A, B) perpendicularly thereto mutually form an angle.

3. An articulated connection system as claimed in claim **2, characterised in that** said angle is greater than 90°.

4. An articulated connection system as claimed in claim **1** or **2, characterised in that** the two central levers (5, 6) have substantially equal length, and **in that** the third and fourth lever (8, 9) have substantially equal length.

5. An articulated connection system as claimed in claim **4, characterised in that** the aforesaid central levers (5, 6) have substantially greater length than said third and fourth lever (8, 9).

6. An articulated connection system as claimed in claim **5, characterised in that** said seat is a motor vehicle rear seat in which the backrest (3) can be moved relative to the cushion (2) between an upright position for normal use and a forward rotated position, in contact with the cushion (2).

7. A motor vehicle rear seat, comprising a cushion (2), a backrest (3) connected to the cushion (2) or to the body of the motor vehicle by articulated connection means (4) and movable between an upright position for normal use and a position rotated forward in contact with the cushion (2),
**characterised in that** said articulated connection means are made according to any of claims 1-6.

8. A motor vehicle rear seat according to claim 7,
**characterised in that** said articulated connection means are so shaped and arranged that the displacement of the backrest (3) from the upright position to the forward rotated position occurs according to a complex rotation which brings the backrest (3) to said rotated position over the cushion (2) that is slightly rearward relative to the direction of advance of the motor vehicle, so that the upper edge of the backrest (3) or of the head rest (3a) which may be positioned over it is substantially flush with the front edge (2b) of the cushion (2), relative to said longitudinal direction of the motor vehicle.

## Patentansprüche

1. Gelenkiges Verbindungssystem, umfassend
- eine erste Konstruktion (2),
- eine zweite Konstruktion (3), welche mit Hilfe von gelenkigen Verbindungsmitteln (4) mit der ersten Konstruktion (2) verbunden ist,
wobei es sich bei der ersten Konstruktion (2) um den Polstersitzflächenrahmen eines Kraftfahrzeugsitzes oder um den Aufbau des Kraftfahrzeugs und bei der zweiten Konstruktion (3) um den Rückenlehnenrahmen des Sitzes handelt,
wobei die gelenkigen Verbindungsmittel (4) ein System aus vier Hebeln (5, 6, 8, 9) umfassen, welche ein doppeltes vierseitiges Verbindungsgestänge definieren und gelenkig auf einer Seite an zwei auf der ersten Konstruktion (2) positionierten ersten parallelen Achsen (A₀, B₀) und auf der gegenüberliegenden Seite an zwei auf der zweiten Konstruktion (3) positionierten zweiten parallelen Achsen (A, B) angebracht sind, und wobei zwei mittlere Hebel der vier Hebel (5, 6) kreuzweise und gegenseitig gelenkig aneinander angebracht sind,
**dadurch gekennzeichnet, dass** an den beiden oben genannten ersten Achsen (A₀, B₀) jeweils ein erstes Ende eines ersten (5) der mittleren Hebel und ein erstes Ende eines dritten Hebels (8) gelenkig angebracht sind, und
dass an den beiden oben genannten zweiten Achsen (A, B) jeweils ein erstes Ende des zweiten mittleren Hebels (6) und ein erstes Ende eines vierten Hebels (9) gelenkig angebracht sind, und
dass das zweite Ende des dritten Hebels (8) gelenkig an dem zweiten Ende des zweiten mittleren Hebels (6) angebracht ist, und
dass das zweite Ende des vierten Hebels (9) gelenkig an dem zweiten Ende des ersten mittleren Hebels (5) angebracht ist.

2. Gelenkiges Verbindungssystem nach Anspruch 1, **dadurch gekennzeichnet, dass** eine die beiden ersten Achsen (A₀, B₀) senkrecht schneidende erste gerade Linie (I) und eine die beiden zweiten Achsen (A, B) senkrecht schneidende zweite gerade Linie (m) gegenseitig einen Winkel bilden.

3. Gelenkiges Verbindungssystem nach Anspruch 2, **dadurch gekennzeichnet, dass** der Winkel größer als 90° ist.

4. Gelenkiges Verbindungssystem nach Anspruch 1 oder 2, **dadurch gekennzeichnet, dass** die beiden mittleren Hebel (5, 6) im Wesentlichen die gleiche Länge haben, und dass der dritte und der vierte Hebel (8, 9) im Wesentlichen die gleiche Länge haben.

5. Gelenkiges Verbindungssystem nach Anspruch 4, **dadurch gekennzeichnet, dass** die oben genannten mittleren Hebel (5, 6) eine wesentlich größere Länge als der dritte und der vierte Hebel (8, 9) haben.

6. Gelenkiges Verbindungssystem nach Anspruch 5, **dadurch gekenntzeichnet,** dass der Sitz ein Kraftfahrzeugrücksitz ist, bei dem die Rückenlehne (3) relativ zu der Polstersitzfläche (2) zwischen einer aufrechten Stellung für normalen Gebrauch und einer nach vorne gedrehten, die Polstersitzfläche (2) berührende, Stellung bewegt werden kann.

7. Kraftfahrzeugrücksitz, welcher eine Polstersitzfläche (2) und eine Rückenlehne (3) umfasst, welche mit der Polstersitzfläche (2) oder dem Aufbau des Kraftfahrzeugs über gelenkige Verbindungsmittel (4) verbunden ist und zwischen einer aufrechten Stellung für normalen Gebrauch und einer nach vorne gedrehten, die Polstersitzfläche (2) berührende, Stellung bewegt werden kann,
**dadurch gekennzeichnet, dass** die gelenkigen Verbindungsmittel nach einem der Ansprüche 1 bis 6 hergestellt sind.

8. Kraftfahrzeugrücksitz nach Anspruch 7,
**dadurch gekennzeichnet, dass** die gelenkigen Verbindungsmittel so geformt und angeordnet sind, dass die Verlagerung der Rückenlehne (3) aus der aufrechten Stellung in die nach vorne gedrehte Stellung gemäß einer komplexen Drehung erfolgt, welche die Rückenlehne (3) in die gedrehte Stellung über der Polstersitzfläche (2), welche relativ zu der Vorwärtsrichtung des Kraftfahrzeugs leicht nach hinten verschoben ist, bringt, so dass der obere Rand der Rückenlehne (3) oder der möglicherweise über derselben positionierten Kopfstütze (3a) im Wesentlichen bündig mit dem vorderen Rand (2b) der Polstersitzfläche (2) relativ zu der Längsrichtung des Kraftfahrzeugs ausgerichtet ist.

## Revendications

1. Un système de liaison articulé, comprenant :
- une première structure (2),
- une seconde structure (3), reliée à ladite première structure (2) par des moyens de liaison articulés,
ladite première structure (2) étant l'armature de coussin d'un siège de véhicule motorisé, ou le corps du véhicule motorisé, et ladite seconde structure (3) étant l'armature de dossier dudit siège,
lesdits moyens de liaison articulés (4) comprenant un système de quatre leviers (5, 6, 8, 9) définissant un couplage quadrilatéral double, et articulés sur l'un des côtés selon deux premiers axes parallèles (A₀, B₀) situés sur ladite première structure (2), et sur l'autre côté selon deux seconds axes parallèles (A, B) situés sur ladite seconde structure (3), et ayant deux leviers centraux desdits quatre leviers (5, 6) agencés en travers l'un de l'autre et mutuellement articulés,
**caractérisé en ce qu'une** première extrémité d'un premier (5) desdits leviers centraux et une première extrémité d'un troisième levier (8) sont respectivement articulées à l'emplacement des deux premiers axes (A₀, B₀) susmentionnés, et
une première extrémité du second levier central (6) et une première extrémité du quatrième levier (9) sont respectivement articulées à l'emplacement desdits seconds axes (A, B), et
**en ce que** la seconde extrémité du troisième levier (8) est articulée avec la seconde extrémité du second levier central (6), et
**en ce que** la seconde extrémité du quatrième levier (9) est articulée avec la seconde extrémité du premier levier central (5).

2. Un système de liaison articulé tel que revendiqué dans la revendication 1, **caractérisé en ce qu'une** première ligne droite (1) coupant les deux premiers axes (A₀, B₀) de façon perpendiculaire, et une seconde ligne droite (m) coupant les deux seconds axes (A, B) de façon perpendiculaire forment un angle mutuellement.

3. Un système de liaison articulé tel que revendiqué dans la revendication 2, **caractérisé en ce que** ledit angle est supérieur à 90°.

4. Un système de liaison articulé tel que revendiqué dans la revendication 1 ou la revendication 2, **caractérisé en ce que** les deux leviers centraux (5, 6) ont une longueur sensiblement égale, et **en ce que** le troisième et le quatrième leviers (8, 9) ont une longueur sensiblement égale.

5. Un système de liaison articulé tel que revendiqué dans la revendication 4, **caractérisé en ce que** les leviers centraux (5, 6) susmentionnés ont une longueur sensiblement supérieure à celle desdits troisième et quatrième leviers (8, 9).

6. Un système de liaison articulé tel que revendiqué dans la revendication 5, **caractérisé en ce que** ledit siège est un siège arrière de véhicule motorisé dans lequel le dossier (3) peut être déplacé par rapport au coussin (2) entre une position verticale destinée à une utilisation normale et une position de rotation vers l'avant, en contact avec le coussin (2).

7. Un siège arrière de véhicule motorisé, comprenant un coussin (2), un dossier (3) relié au coussin (2) ou au corps du véhicule motorisé par des moyens de liaison articulés (4) et déplaçable entre une position verticale destinée à une utilisation normale et une position pivotée vers l'avant en contact avec le coussin (2),
**caractérisé en ce que** lesdits moyens de liaison articulés sont réalisés selon l'une quelconque des revendications 1 à 6.

8. Un siège arrière de véhicule motorisé selon la revendication 7,
**caractérisé en ce que** lesdits moyens de liaison articulés sont formés et agencés de telle façon que le déplacement du dossier (3) depuis la position verticale vers la position de rotation vers l'avant est réalisé selon une rotation complexe amenant le dossier (3) à ladite position de rotation sur le coussin (2) de façon légèrement reculée par rapport à la direction de progression du véhicule motorisé, de telle façon que le bord supérieur du dossier (3) ou de l'appui-tête (3a) pouvant être agencé sur celui-ci affleure sensiblement le bord avant (2b) du coussin (2) par rapport à ladite direction longitudinale du véhicule motorisé.
